Europäisches Patentamt

European Patent Office

Office européen des brevets

(11) Veröffentlichungsnummer: **0 516 114 B1**

(12) **EUROPÄISCHE PATENTSCHRIFT**

(45) Veröffentlichungstag der Patentschrift: **06.12.95**

(51) Int. Cl.6: **B29C 45/67**

(21) Anmeldenummer: **92109012.2**

(22) Anmeldetag: **29.05.92**

(54) **Hydraulische Schliessvorrichtung für eine Spritzgiessform.**

(30) Priorität: **31.05.91 DE 4117852**

(43) Veröffentlichungstag der Anmeldung:
**02.12.92 Patentblatt 92/49**

(45) Bekanntmachung des Hinweises auf die
Patenterteilung:
**06.12.95 Patentblatt 95/49**

(84) Benannte Vertragsstaaten:
**AT CH DE ES FR GB IT LI**

(56) Entgegenhaltungen:
**CH-A- 486 970**
**DE-B- 1 579 033**
**GB-A- 1 600 733**
**US-A- 2 452 292**

**PATENT ABSTRACTS OF JAPAN vol. 9, no. 330 (M-442)(2053) 25. Dezember 1985 & JP-A-60 162 619 (TOSHIBA KIKAI)**

(73) Patentinhaber: **Hemscheidt Maschinentechnik Schwerin GmbH & Co.**
**Werkstrasse 226**
**D-19061 Schwerin (DE)**

(72) Erfinder: **Dannehl, Friedrich-Wilhelm, Ing. (grad.)**
**Burgweg 34**
**W-5800 Hagen 5 (DE)**
Erfinder: **Reinelt, Werner, Ing. (grad.)**
**Am Hang 3**
**W-4630 Bochum 1 (DE)**

EP 0 516 114 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine hydraulische Schließvorrichtung für eine Spritzgießform mit einer feststehenden, durch Holme an dem Zylindergehäuse eines Schließzylinders abgestützten Trägerplatte und mit einer von einem hohlzylindrischen Fahrkolben auf den Holmen verschiebbaren Trägerplatte, wobei im Zylindergehäuse ein Druckkolben angeordnet ist, dessen Kolbenstange mit einer im Verhältnis kleineren Querschnittsfläche versehen ist und in eine im Fahrkolben ausgebildete Druckkammer eintaucht, und wobei beide Kolben voneinander getrennt jeweils beidseitig mit Druckflüssigkeit beaufschlagbar sind.

Aus der DE-AS 15 79 033 ist eine Schließvorrichtung bekannt, deren verschiebbare Trägerplatte mit einem hohlzylindrisch ausgebildeten Fahrkolben in die Schließstellung gefahren wird. Der Fahrkolben ist auf der Kolbenstange des Schließzylinders verschiebbar angeordnet. Der im Zylindergehäuse des Schließzylinders gelagerte Druckkolben weist eine größere Querschnittsfläche auf als die in eine Druckkammer innerhalb des Fahrkolbens eintauchende Kolbenstange. Zum Schließen der Form wird zunächst Druckflüssigkeit in die Druckkammer des Fahrkolbens eingeleitet, der daraufhin ausfährt. Anschließend wird die größere Querschnittsfläche des Druckkolbens mit Druck beaufschlagt, so daß der Druck in der Druckkammer entsprechend dem Verhältnis der Querschnittsflächen ansteigt und die Schließkraft erhöht. Die aus dem Zylindergehäuse des Schließzylinders austretende Kolbenstange muß jedoch von auf sie einwirkenden Querkräften, die allein schon das Eigengewicht verursacht, entlastet werden. Dazu ist eine aufwendige, sich über die gesamte Länge der Schließvorrichtung erstreckende Säulenführung notwendig, welche das Bauvolumen der ohnehin schon raumaufwendigen Vorrichtung zusätzlich vergrößert. Zur Rückführung der Druckflüssigkeit aus den Ringräumen des Fahrkolbens ist darüber hinaus eine zweite Längsbohrung in der Kolbenstange vorzusehen.

Aus der DE-AS 18 05 938 ist es zudem bekannt, den Fahrkolben auf der Länge seines Verschiebeweges an der Innenwandung des Zylindergehäuses zu führen. Mit dem ausfahrenden Fahrkolben wird Druckflüssigkeit aus einem außen am Zylindergehäuse angeschlossenen Tank in den Ringraum angesaugt, der sich unterhalb des Fahrkolbens zwischen der Kolbenstange des Druckkolbens und dem Zylindergehäuse befindet. Die aus dem Tank angesaugte Druckflüssigkeit wird von dem sich in Schließrichtung bewegenden Druckkolben im Verhältnis der wirksamen Kolbenflächen auf einen höheren Druck komprimiert, wodurch die Schließkraft entsprechend verstärkt wird. Um die Form schnell zufahren zu können, muß eine große Flüssigkeitsmenge in relativ kurzer Zeit aus dem Tank in den Ringraum angesaugt werden. Dieses erfordert einen bauaufwendigen Flüssigkeitstank, weite Durchlaufquerschnitte und ein entsprechend groß dimensioniertes Absperrventil. Nachteilig ist auch, daß die Druckflüssigkeit von dem Druckübersetzer in einem von der Wandung des Zylindergehäuses umschlossenen, großflächigen Ringraum auf einen bis auf 400 bar ansteigenden Druck gebracht wird. Dieses setzt eine relativ dickwandige, schwere Ausführung des Zylindergehäuses voraus.

Es ist somit die Aufgabe der vorliegenden Erfindung, eine hydraulische Schließvorrichtung der eingangs genannten Gattung baulich zu vereinfachen.

Diese Aufgabe wird mit den im Anspruch angegebenen Merkmalen gelöst.

Die erfindungsgemäß ausgebildete Schließvorrichtung zeichnet sich insbesondere durch eine kostengünstig herzustellende, einfache Bauweise aus, die vergleichsweise mit einer kleinen Pumpenleistung auskommt. Der Fahrkolben ist an der Innenwandung des Zylindergehäuses mit einer großen Querschnittsfläche geführt, so daß eine aufwendige Säulenkonstruktion entfallen kann. Der durch die Druckübersetzung erzeugte hohe Druck wird in der Druckkammer innerhalb des Fahrkolbens aufgebaut und belastet nicht die Wandung des Zylindergehäuses. Ein außenliegender Flüssigkeitstank wird nicht benötigt. Mit dem ausfahrenden Fahrkolben wird aus dem großvolumigen Ringraum im Zylindergehäuse eine relativ große Flüssigkeitsmenge ausgeschoben, die jedoch nicht nutzlos verdrängt, sondern über eine außenliegende Druckleitung in die Druckkammer des Fahrkolbens umgeleitet wird und den Förderstrom der Pumpe ergänzt. Der Fahrkolben wird deshalb mit einer vergleichsweise geringen Pumpenleistung zügig ausgefahren.

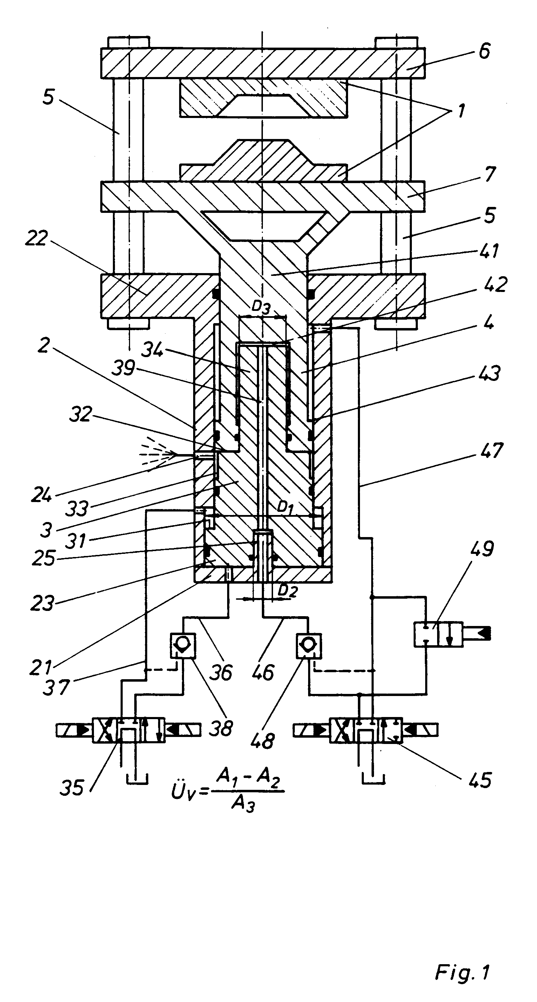

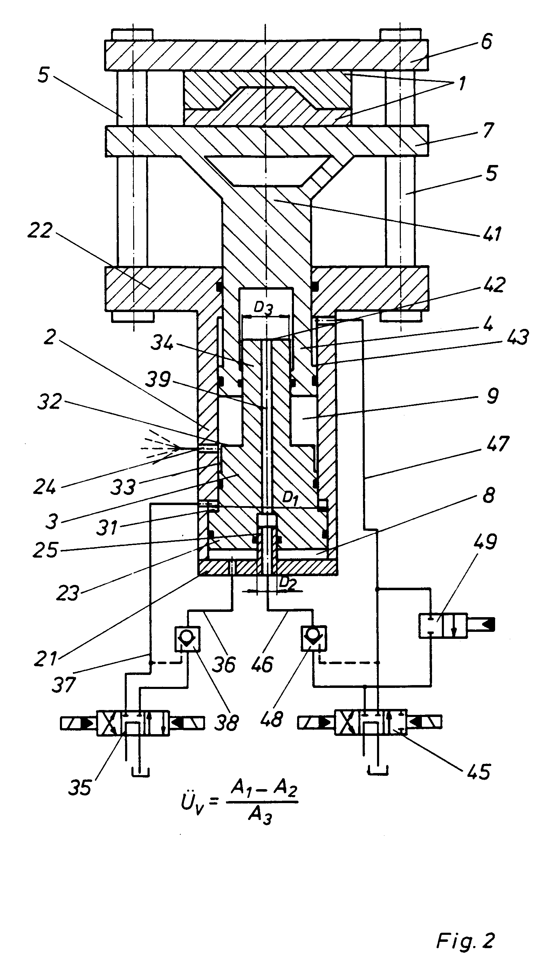

Die erfindungsgemäße Schließvorrichtung wird nachfolgend anhand eines in der Zeichnung im Längsschnitt schematisch dargestellten Ausführungsbeispiels näher erläutert. Fig. 1 zeigt die Schließvorrichtung in der Öffnungsstellung der Spritzgießform, während in Fig. 2 die Schließstellung dargestellt ist.

Der Schließzylinder der hydraulischen Schließvorrichtung für die Spritzgießform 1 besteht in den wesentlichen Bauteilen aus einem Zylindergehäuse 2, dem darin verschiebbaren Druckkolben 3 und dem Fahrkolben 4. Das Zylindergehäuse 2 ist an einem Ende durch einen Zylinderboden 21 verschlossen und an dem anderen offenen Ende mit einem flanschförmigen Ansatz 22 versehen, auf dem mit Abstand über mindestens zwei außenliegende Holme 5 die feststehende Trägerplatte 6 der sich aus zwei ineinandergreifenden Hälften zusammensetzenden Spritzgießform 1 abgestützt ist. Die andere Hälfte der Spritzgießform 1 ist auf einer seitlich an den Holmen 5 verschiebbar geführten Trägerplatte 7 gelagert, die mit der aus dem Zylindergehäuse 2 austretenden Kolbenstange 41 des Fahrkolbens 4 verbunden ist. Der Druckkolben 3 ist stufenförmig ausgebildet und im unteren Bereich seiner großen Querschnittsfläche $A_1$ entsprechend dem Durchmesser $D_1$ in einem erweiterten Abschnitt 23 der Innenwandung des Zylindergehäuses 2 verschiebbar geführt, so daß zwischen dem Zylinderboden 21 und dem Druckkolben 3 ein Druckraum 8 gebildet wird. Der Druckkolben 3 besitzt eine untere Ringfläche 31 und eine obere Ringfläche 32 sowie einen weiteren Absatz 33 im Bereich einer in das Zylindergehäuse 2 eingebrachten, nach außen führenden Radialbohrung 24. Oberhalb der Ringfläche 32 greift der Druckkolben 3 mit einer in Richtung Spritzgießform 1 weisenden Kolbenstange 34 in eine innenliegende Ausnehmung des hohlzylindrisch ausgebildeten Fahrkolbens 4 ein, die als Druckkammer 42 bezeichnet wird. Die Querschnittsfläche der Kolbenstange 34 ist entsprechend dem Durchmesser $D_3$ mit $A_3$ bezeichnet. Der Fahrkolben 4 besitzt die Ringfläche 43 auf der der Spritzgießform 1 zugewandten Seite. Die zur gegenseitigen Abdichtung der verschiedenen Druckräume notwendigen Dichtringe sind ohne Bezugszeichen dargestellt.

Der Schließzylinder wird über zwei jeweils an eine Hochdruckleitung und einen Tank angeschlossene, als 4/3-Wegeventile 35, 45 ausgebildete Steuerventile gesteuert, von denen das eine dem Druckkolben 3 und das andere dem Fahrkolben 4 zugeordnet ist. Das dem Druckkolben 3 zugeordnete 4/3-Wegeventil 35 ist einerseits mit einer durch den Zylinderboden 21 einmündenden Druckleitung 36 an den Druckraum 8 unterhalb des Druckkolbens 3 und andererseits durch eine Druckleitung 37 an den nichtbezeichneten Ringraum oberhalb der Ringfläche 31 angeschlossen, so daß der Druckraum 8 und der Ringraum oberhalb der Ringfläche 31 wechselweise mit Druckflüssigkeit beaufschlagbar sind. In die Druckleitung 36 ist ein über die Druckleitung 37 hydraulisch entsperrbares Rückschlagventil 38 eingeschaltet.

Die Druckkammer 42 im Fahrkolben 4 ist über eine Druckleitung 46 an das 4/3-Wegeventil 45 angeschlosen, wobei die Druckleitung 46 in ein zentrisch im Zylinderboden 31 angeordnetes Standrohr 25 einmündet, das mit dem Durchmesser $D_2$ die Querschnittsfläche $A_2$ aufweist und in eine nichtbezeichnete Ausnehmung im Boden des Druckkolbens 3 eintaucht. Diese geht in eine zentrisch durch den Druckkolben 3 hindurchgeführte axiale Längsbohrung 39 über, die in der Druckkammer 42 oberhalb der Kolbenstange 41 endet, so daß die von dem 4/3-Wegeventil 45 zugeleitete Druckflüssigkeit über das Standrohr 25 und die Längsbohrung 39 in die Druckkammer 42 gelangt.

Die Ringfläche 43 des Fahrkolbens 4 wird über eine Druckleitung 47 mit Druckflüssigkeit von dem 4/3-Wegeventil 45 beaufschlagt. Die Druckkammer 42 ist gegenüber dem 4/3-Wegeventil 45 durch ein hydraulisch entsperrbares Rückschlagventil 48 in der Druckleitung 46 verriegelbar, das mit der über die Druckleitung 47 zugeführten Druckflüssigkeit geöffnet wird. Die beim Ausfahren des Fahrkolbens 4 über die Ringfläche 43 ausgeschobene Druckflüssigkeit kann über ein an die Druckleitung 46 anschließbares 2/2-Wegeventil 49 unmittelbar aus der Druckleitung 47 über das Rückschlagventil 48, das Standrohr 25 und die Längsbohrung 39 in die Druckkammer 42 umgeleitet werden.

Zum Schließen der Spritzgießform 1 wird der Fahrkolben 4 ausgefahren und die an den Holmen 5 verschiebbare Trägerplatte 7 in Richtung auf die feststehende Trägerplatte 6 bewegt. Hierzu wird Druckflüssigkeit mit dem 4/3-Wegeventil 45 durch die Druckleitung 46 über das sich öffnende Rückschlagventil 48 in das Standrohr 25 und weiter durch die Längsbohrung 39 in die Druckkammer 42 eingeleitet. Die mit der Ringfläche 43 in die Druckleitung 47 ausgeschobene Druckflüssigkeit wird über das offengeschaltete 2/2-Wegeventil 49 in die Druckkammer 42 umgeleitet. Auf diese Weise wird über das 4/3-Wegeventil 45 und gleichzeitig über das 2/2-Wegeventil 49 ein großer Flüssigkeitsstrom in die Druckkammer 42 zugeführt und damit ein zügiges Schließen der Spritzgießform 1 sichergestellt. Der ausfahrende Fahrkolben 4 öffnet im Zylindergehäuse 1 über der oberen Ringfläche 32 des Druckkolbens 3 und um die Kolbenstange 34 einen Ringraum 9, in den durch die Radialbohrung 24 Außenluft angesaugt wird.

Anschließend wird Druckflüssigkeit mit dem 4/3-Wegeventil 35 über die Druckleitung 36 und das Rückschlagventil 38 in den Druckraum 8 unter den Druckkolben 3 geleitet, so daß die in Fig. 2 dargestellte Schließstellung erreicht wird. Der Druckkolben 3 überträgt den in dem Druckraum 8 auf die große untere Kolbenfläche $A_1$ wirkenden Druck bzw. die daraus resultierende Druckkraft auf die in die Druckkammer 42 eintauchende Kolbenstange 34, die mit ihrer wesentlich kleineren Kolbenfläche $A_3$ als Druckübersetzer wirkt und den Druck innerhalb der Druckkammer 42 im Verhältnis $\ddot{U}_v$ der wirksamen Kolbenflächen $\ddot{U}_v = (A_1 - A_2) : A_3$ ansteigen läßt. Durch den nunmehr innerhalb der Druckkammer 42 wirkenden sehr hohen Druck wird die Kraft zum Zuhalten der Form erheblich verstärkt.

Zum Öffnen der Form 1 werden die 4/3-Wegeventile 35 und 45 zum Tank offengeschaltet, wobei Druckflüssigkeit über die Druckleitungen 37 und 47 auf die Ringfläche 31 des Druckkolbens 3 und die Ringfläche 43 des Fahrkolbens 4 gelangt. Über die Druckleitungen 37 und 47 werden gleichzeitig die Rückschlagventile 38 und 48 aufgesteuert, so daß einerseits der Druckraum 8 unter dem Druckkolben 3 und andererseits die Druckkammer 42 entlastet werden und die anstehende Druckflüssigkeit abströmen kann. Die in den Ringraum 9 unterhalb des Fahrkolbens 4 angesaugte Luft wird wieder über die Radialbohrung 24 aus dem Zylindergehäuse 2 ausgeschoben. Der Druckkolben 3 und der Fahrkolben 4 kehren in ihre Ausgangsstellung zurück, in der die Spritzgießform 1 geöffnet ist.

**Patentansprüche**

1. Hydraulische Schließvorrichtung für eine Spritzgießform (1) mit einer feststehenden, durch Holme (5) an dem Zylindergehäuse (2) eines Schließzylinders abgestützten Trägerplatte (6) und mit einer von einem hohlzylindrischen Fahrkolben (4) auf den Holmen (5) verschiebbaren Trägerplatte (7), wobei im Zylindergehäuse (2) ein Druckkolben (3) angeordnet ist, dessen Kolbenstange (34) mit einer im Verhältnis kleineren Querschnittsfläche versehen ist und in eine im Fahrkolben (4) ausgebildete Druckkammer (42) eintaucht, und wobei beide Kolben (3, 4) voneinander getrennt jeweils beidseitig mit Druckflüssigkeit beaufschlagbar sind, gekennzeichnet durch folgende Merkmale:

   a) der Fahrkolben (4) ist auf der Länge seines Verschiebeweges an der Innenwandung des Zylindergehäuses (2) in einem an einem Absatz (33) des Druckkolbens (3) gebildeten Ringraum (9) geführt, der durch eine Radialbohrung (24) im Zylindergehäuse (2) mit der Außenluft verbunden ist;

   b) der über der Ringfläche (43) des Fahrkolbens (4) gebildete Ringraum ist über eine außenliegende Druckleitung (47) an die Druckkammer (42) im Fahrkolben (4) anschließbar, wobei im Zylinderboden (21) des Zylindergehäuses (2) ein in den Druckkolben (3) eingreifendes Standrohr (25) vorgesehen ist, das über eine durch den Druckkolben (3) und dessen Kolbenstange (34) hindurchgeführte Längsbohrung (39) mit der Druckkammer (42) verbunden ist.

**Claims**

1. A hydraulic closing apparatus for an injection moulding mould (1) comprising a feed carrier plate (6) which is supported by bars (5) on the cylinder housing (2) of a closing cylinder, and a carrier plate (7) which is displaceable on the bars (5) by a hollow-cylindrical travel piston (4), wherein arranged in the cylinder housing (2) is a pressure piston (3) whose piston rod (34) is provided with a cross-sectional area which is smaller in comparison, the piston rod extending into a pressure chamber (42) formed in the travel piston (4), and wherein both pistons (3, 4) can each be acted upon separately from each other by pressure fluid on both sides, characterised by the following features:

   a) the travel piston (4) is guided over the length of its displacement movement against the inside wall of the cylinder housing (2) in an annular space (9) which is formed at a step (33) on the pressure piston (3) and which is communicated with the outside air through a radial bore (24) in the cylinder housing (2); and

   b) the annular space formed by way of the annular surface (43) of the travel piston (4) can be connected by way of an externally disposed pressure line (47) to the pressure chamber (42) in the travel piston (4), wherein provided in the cylinder bottom (21) of the cylinder housing (2) is a standpipe (25) which engages into the pressure piston (3) and which is connected to the pressure chamber (42) by way of a longitudinal bore (39) which is passed through the pressure piston (3) and its piston rod (34).

**Revendications**

1. Dispositif de fermeture hydraulique d'un moule d'injection (1) comprenant une plaque de support (6), fixe, portée par l'intermédiaire de colonnes (5) par le corps (2) d'un vérin de fermeture, une plaque de support (7) déplacée sur les colonnes (5) par un piston mobile (4), cylindrique, creux, le corps (2) du vérin comportant un piston de compression (3) dont la tige (34) a une section relativement petite et pénètre dans une chambre de compression (42) réalisée dans le piston mobile (4), les deux pistons (3, 4) étant sollicités séparément de chaque côté par du liquide sous pression, caractérisé en ce que :

   a) le piston mobile (4) est guidé sur la longueur de sa course contre la paroi intérieure du corps de vérin (2) dans un volume annulaire (9) formé à l'épaulement (33) du piston de compression (3), ce volume étant relié par un perçage radial (24) du corps de vérin (2) avec l'air extérieur ;

   b) le volume annulaire formé à la surface annulaire (43) du piston mobile (4) peut être relié par une conduite de pression (47), extérieure, à la chambre de compression (42) du piston mobile (4), le fond (21) du corps (2) du vérin comportant un tube (25) pénétrant dans le piston de compression (3), ce tube étant relié à la chambre de compression (42) par un perçage longitudinal (39) traversant le piston de compression (3) et sa tige de piston (34).

$$\ddot{U}_V = \frac{A_1 - A_2}{A_3}$$

Fig. 1

$$\ddot{U}_V = \frac{A_1 - A_2}{A_3}$$

*Fig. 2*